(19) Europäisches Patentamt

European Patent Office

Office européen des brevets

(11) Veröffentlichungsnummer: **0 099 098**
**B1**

(12) **EUROPÄISCHE PATENTSCHRIFT**

(45) Veröffentlichungstag der Patentschrift:
14.05.86

(21) Anmeldenummer: 83106787.1

(22) Anmeldetag: 11.07.83

(51) Int. Cl.⁴: **A 01 F 15/08**

(54) Anordnung an einer Ballenpresse zum Einbringen einer Behandlungsflüssigkeit in das Erntegut.

(30) Priorität: **12.07.82 US 397304**

(43) Veröffentlichungstag der Anmeldung:
**25.01.84 Patentblatt 84/4**

(45) Bekanntmachung des Hinweises auf die Patenterteilung:
**14.05.86 Patentblatt 86/20**

(84) Benannte Vertragsstaaten:
**DE FR GB IT**

(56) Entgegenhaltungen:
**FR - A - 2 473 259**
**GB - A - 2 088 487**

(73) Patentinhaber: **DEERE & COMPANY, 1 John Deere Road, Moline Illinois 61265 (US)**

(72) Erfinder: **Penfoid, Garn Farley, 544 - 33rd Ave., East Moline Illinois 61244 (US)**
Erfinder: **Rabe, David Lee, 504 Indian Trail Road, Ottumwa Iowa 52501 (US)**

(74) Vertreter: **Fricke, Joachim, Dr. et al, Dr. R. Döring, Dr. J. Fricke, Patentanwälte Josephspitalstrasse 7, D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Anordnung an einer Presse zur Herstellung von Ballen aus Erntegut mit den Merkmalen des Oberbegriffs des Anspruchs 1.

Eine solche Anordnung ist aus der US-A-4 185 549 bekannt. Bei der bekannten Anordnung weist die der Ballenformkammer zugeordnete Stirnseite des Presskolbens eine Reihe von von der Stirnfläche vorspringenden Einbringungsdüsen für die Behandlungsflüssigkeit auf. Diese sind über ein Verteilersystem innerhalb des Kolbens und einem Schlauch mit einem Steuerventil und einer Zumesseinrichtung verbunden. Die Zumesseinrichtung begrenzt die Injektion der Behandlungsflüssigkeit in das Erntegut auf den Presshub des Kolbens und begrenzt gleichzeitig die Menge der eingespritzten Behandlungsflüssigkeit. Das Steuerventil wird von einem Kurventrieb gesteuert, der synchron mit dem Presskolben der Maschine angetrieben wird.

Die Vorteile der Anwendung von Behandlungsflüssigkeiten bei der Herstellung von Ballen aus dem Erntegut sind bekannt. Die für diese Zwecke geeigneten Behandlungsflüssigkeiten sind häufig im hohen Masse flüchtig. Dies führt häufig zu hohen Verlusten durch den entstehenden Dampf, der sich nicht gleichförmig in dem Ballen verteilt. Ausserdem wird der Dampf nur in begrenztem Masse von dem Heu zurückgehalten und kann daher seine Wirkung nicht voll entfalten.

Während die bekannte Vorrichtung in mancherlei Hinsicht zufriedenstellend arbeitet kann sie jedoch nicht optimal genug auf unterschiedliche Erntegüter und Erntebedingungen eingestellt werden, so dass die Anwendung der Behandlungsflüssigkeit nicht immer unter den günstigsten Verhältnissen möglich ist.

Ähnliches gilt auch für die Anordnung bei einer Presse zur Herstellung von runden oder zylindrischen Ballen, wie sie beispielsweise aus der US-A-4 228 637 bekannt ist. Hier sind mehrere, die Behandlungsflüssigkeit abgebende Düsen in seitlichen Abständen quer zur Zulaufrichtung des mattenförmig zugeförderten Erntegutes angeordnet, um die Behandlungsflüssigkeit bereits auf die ausgebreitete Erntegutmatte aufzubringen, bevor die Matte zu dem zylindrischen Ballen gewickelt wird. Fühler sind über dem Eintrittsbereich der Erntegutmatte angeordnet, um Änderungen der Breite und seitlichen Lage der Matte festzustellen und Ventile für die Behandlungsflüssigkeit in den Zuleitungen der Düsen zu steuern. Diese Anordnung spricht zwar auf Änderungen in der Breite und der seitlichen Lage der ankommenden Erntegutmatte an. Eine optimale Einstellung auf die besondere Art des Erntegutes und die besonderen Erntegutbedingungen ist hier aber ebenfalls nicht möglich.

Es ist Aufgabe der Erfindung eine Anordnung mit den Merkmalen des Oberbegriffs des Anspruchs so weiterzubilden, dass die Einbringung der Behandlungsflüssigkeit in den Ballen wesentlich günstiger als bisher auf die tatsächlich vorliegenden Verhältnisse abgestellt werden kann, wobei Verluste an Behandlungsflüssigkeit aufgrund von Verdampfung möglichst herabgesetzt werden sollen.

Diese Aufgabe wird durch die Massnahme nach Anspruch 1 gelöst.

Unter dem in diesem Zusammenhang verwendeten Begriff «Ballenbildungsgeschwindigkeit» soll die Gewichtsmenge an Heu oder Erntegut pro Zeiteinheit verstanden werden, die vom Boden aufgenommen, in die Ballenbildungskammer gefördert und in den Ballen verpresst wird. Diese Ballenbildungsgeschwindigkeit variiert in Abhängigkeit von der Art des Erntegutes, von den jeweilig vorherrschenden Erntebedingungen sowie von den jeweiligen Bedingungen auf dem Feld.

Aufgrund der neuen Anordnung wird gewährleistet, dass die Behandlungsflüssigkeit in enger Abhängigkeit von der Ballenbildungsgeschwindigkeit während jedes Kolbenzyklus erfolgt. Dadurch kann die Einbringung der Erntegutbehandlungsflüssigkeit in das Ernetgut genau auf die Gewichtsmenge an Heu pro Zeiteinheit abgestellt werden, die zum Ballen verpresst wird. Es spielt dabei keine Rolle, dass sich in der Praxis die Ballenbildungsgeschwindigkeit fortlaufend ändert. Solche Änderungen lassen sich grundsätzlich nicht vermeiden und werden z.B. verursacht durch Veränderungen in der Antriebsgeschwindigkeit, den auf dem Feld herrschenden Bedingungen und dem Zustand des Erntegutes.

Die Anordnung ist besonders vorteilhaft bei kleineren Pressen zum Herstellen von rechteckförmigen Ballen, die überlicherweise einen in einem Kanal zyklisch bewegbaren Presskolben von rechteckförmiger Gestalt aufweisen, der Vorschubwandler erfasst die Vorschubgeschwindigkeit des dem Pressvorgang unterworfenen Erntegutes in dem Presskanal. Dieser erfasste Wert repräsentiert die Ballenbildungsgeschwindigkeit. Das von dem Vorschubwandler erzeugte Vorschubsignal ist somit für die Verschiebung des Erntegutes durch den Presskanal pro Kolbenzyklus repräsentativ. Dieses Vorschubsignal wird einem Vorschubzähler zur Speicherung zugeleitet. Über diese gespeicherten Signale wird dann die Einbringungsgeschwindigkeit der Behandlungsflüssigkeit bei jedem Presshub gesteuert, und zwar automatisch und in Abhängigkeit von der durch die Vorschubsignale repräsentierten Ballenbildungsgeschwindigkeit. Auf diese Weise erhält man eine augenblickliche, automatische und sofortige Anpassung der Einbringungsgeschwindigkeit der Flüssigkeit an die tatsächliche pro Zeiteinheit in dem Kanal verpresste Gewichtsmenge an Heu oder Erntegut. Da die Menge der Behandlungsflüssigkeit genau an die Erntegutmenge angepasst ist, erhält man eine gute und ausreichende Behandlung des Erntegutes, während gleichzeitig die dafür aufgewendete Menge an Behandlungsflüssigkeit auf die tatsächlich benötigte Menge begrenzt ist, so dass Verluste an Behandlungsflüssigkeit durch Verdampfung überschüssiger oder nicht aufgenommener Mengen vermieden wird.

Vorteilhafterweise ist ein zusätzlich abwärtszählender Zähler zur Aufnahme und Speicherung des Vorschubsignals vorgesehen. Das in diesem zweiten Zähler gespeicherte Vorschubsignal wird über eine Zeiteinrichtung ausgelesen und zur Betätigung einer Schalteinrichtung für eine vorbestimmte Zeitperiode verwendet, welche Zeitperiode der Grösse des Vorschubsignals proportional ist. Diese Schalteinrichtung dient dabei zum Einschalten und Ausschalten der Einbringungseinrichtungen. Bei dieser Weiterbildeung spricht die Anordnung somit auf ein Zeitsignal an, aufgrund dessen das Vorschubsignal von dem ersten Zähler in den zweiten Zähler überführt wird. Durch den Zeitgeber wird die Dauer der Einschaltung der Schalteinrichtung bestimmt, wobei die Dauer abhängig ist von der Grösse des Vorschubsignals.

Zweckmässigerweise ist eine die Strömungsgeschwindigkeit der Flüssigkeit steuernde Einrichtung vorgesehen, welche den Abstand der das Auslesen des Abwärtszählers steuernden Taktimpulse erzeugt, welche die Zeitdauer bestimmen, während der die Einbringungseinrichtung bei einem Vorschubsignal bestimmter Länge eingeschaltet bleibt. Die Einbringungsgeschwindigkeit für die Behandlungsflüssigkeit wird somit auf einfache und wirksame Weise eingestellt in Abhängigkeit von der variierenden Ballenbildungsgeschwindigkeit. Die Bedienungsperson braucht dabei die Anordnung nicht zu überwachen oder in deren Arbeit einzugreifen, da die Anordnung automatisch arbeitet.

Die Erfindung wird nachfolgend anhand schematischer Zeichnungen an einem Ausführungsbeispiel näher erläutert.

Es zeigen:

Figur 1 schematisch eine Draufsicht auf eine Presse zur Herstellung eines Ballens aus Erntegut mit einer Anordnung gemäss der Erfindung.

Figur 2 im grösseren Massstabe und perspektivischer Darstellung den rechteckigen Kolben für eine Ballenpresse zur Herstellung von rechteckförmigen Ballen mit zur Einbringung einer Behandlungsflüssigkeit dienenden Düsen.

Figur 3 im Längsschnitt und im grösseren Massstabe eine einzelne der in Figur 2 gezeigten Düsen.

Figur 4 einen Querschnitt entlang der Schnittlinie IV-IV der Figur 3.

Figur 5 einen Längsschnitt in einer abgewandelten Ausführungsform durch das vordere Ende der Düse.

Figur 6 das Schaltdiagramm einer Steuereinrichtung für die Anordnung nach der Erfindung.

Figur 7a und 7b Einzelheiten einer bevorzugten Steueranordnung und

Figur 8 ein Pulszeitdiagramm für den Steuerkreis nach Figur 7a und 7b.

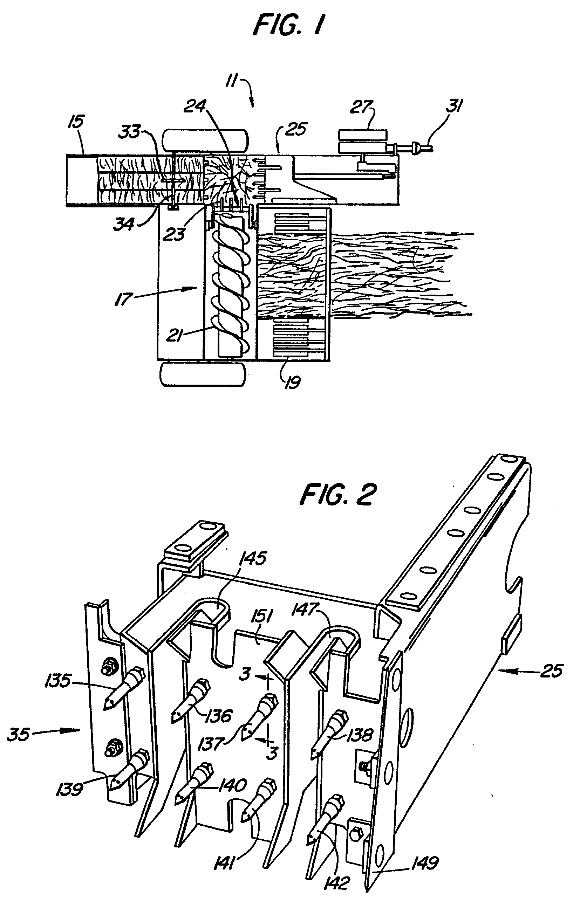

Figur 1 zeigt eine kleinere Presse zum Herstellen von rechteckförmigen Ballen. Die Presse 11 weist eine kanalförmige Ballenbildungskammer 15 auf, der das Erntegut über die Einrichtung 17 zugeführt wird, die einen Aufsammler 19 und eine Querförderschnecke 21 aufweist. Am Abgabeende der Schnecke sind Förderzähne 23 vorgesehen, die das Erntegut durch eine seitliche Eintrittsöffnung 24 vor den Presskolben 25 fördern. Der Kolben 25 bewegt sich über den Antrieb 27, 31 zyklisch in dem Kanal hin und her und schiebt das Erntegut als Pressstrang durch den Kanal. Ein auf dem Erntegutstrang laufendes Messrad 33 dreht sich in Anhängigkeit von der Vorschubgeschwindigkeit des Ballenstranges. Über die Welle 34 des Messrades 33 wird in üblicher Weise eine Ballenbindeeinrichtung gesteuert.

Der Presskolben 25 weist einen Satz 35 von Einbringungsdüsen 135 bis 142 für eine Behandlungsflüssigkeit auf. Diese sind in einer vorderen Stirnwand 151 des Presskolbens 25 jeweils mit Hilfe eines Nippels 173 montiert. An der von der Kolbenstirnwand liegenden Seite 177 des Nippels ist jeweils die Düse 137 montiert, während auf dem rückseitigen Ende 175 ein elektromagnetisch betätigtes Ein- und Ausschaltventil 179 montiert ist. In Fig. 2 sind noch Durchtrittskanäle 145, 147 für die Bindenadeln und ein Kolbenmesser 149 gezeigt, dass beim Vorschub des Kolbens an der Öffnung 24 des Kanals vorbeistreicht und den Erntegutstrang durchtrennt.

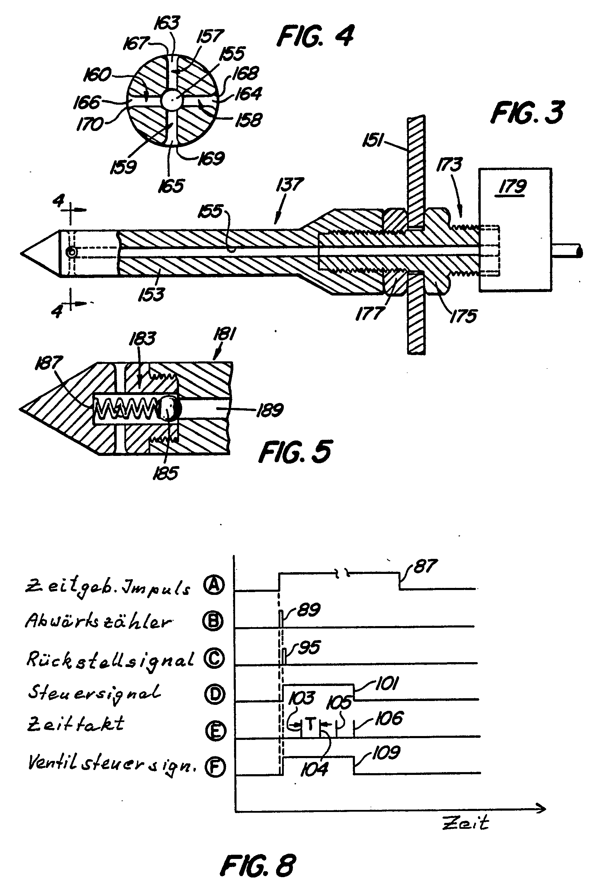

Jede Düse weist in ihrem Schaft 153 einen Längskanal 155 auf, von dem aus radiale Austrittsöffnungen 157 bis 160 ausgehen. Diese sind verengt ausgebildet und weisen in ihrem Mündungsbereich 163 bis 166 jeweils eine nach aussen divergierende Lippe 167 bis 170 auf wie dies Fig. 4 zeigt. Gemäss Fig. 5 kann zwischen dem Ende des Längskanals 189 im Schaft 181 der Düse ein Rückschlagventil 183, bestehend aus Schliesskugel 185 und Feder 187 angeordnet sein, welche die nach dem Zykluy in dem Längskanal verbleibende Behandlungsflüssigkeit automatisch einsperrt, so dass diese nicht verdampfen kann.

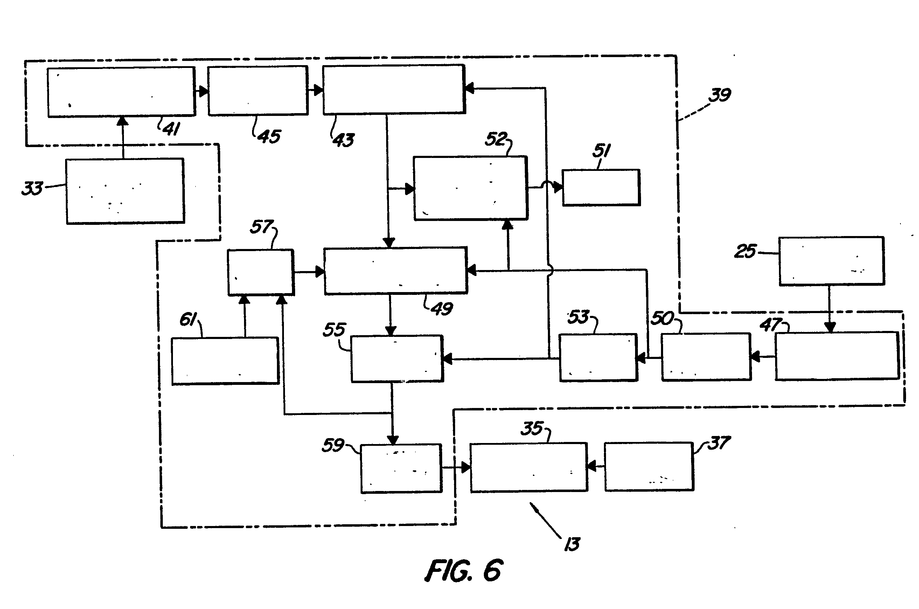

Die neue Anordnung 13 umfasst einen Steuerkreis 39, der schaltplanmässig in Figur 6 gezeigt ist. In Fig. 6 ist auch der Düsensatz 35 schematisch dargestellt, dem die Behandlungsflüssigkeit aus einem Vorratstank 37 zugeführt wird. Ebenfalls sind in Fig. 6 der Presskolben 25 sowie das dem Erntegutstrang zugeordnete Messrad 33 angedeutet. Die Messwerte des Messrades werden einem Vorschubwandler 41 zugeführt. Dieser kann in einer bevorzugten Ausführungsform eine Wellenkodiereinrichtung aufweisen, welche an die Welle 34 des Messrades 33 angeschlossen ist. Das digitale Ausgangssignal des Vorschubwandlers 41 wird einem ersten Vorschubzähler 43 zum Speichern des Vorschubsignales zugeführt, und zwar über einen Richtungsfühler 45, der verhindert, dass Rückwärtsdrehungen des Messrades 33 von den Zählern 43 erfasst werden. Das Vorschubsignal bleibt in dem ersten Vorschubzähler 43 gespeichert, bis ein Auslesebefehl gegeben wird.

Ein Zeitgeberwandler 47 wird an einem ganz bestimmten Punkt des Hubes des Kolbens 25 angestossen, und zwar bevorzugt unmittelbar nach Schliessen der seitlichen Eintrittsöffnung 24 durch den Presskolben 25 und vor Beginn des eigentlichen Verdichtungshubes des Kolbens 25 in der Ballenbildungskammer 15. Es ist wichtig, dass die seitliche Eintrittsöffnung 24 geschlossen ist, damit die Behandlungsflüssigkeit nicht durch die Öffnung nach aussen verdampft. Das Zeitsignal gelangt in einen Signalformkreis 50, der Störanteile ausfiltert, die z.B. durch mechanische Schalter oder dgl. verursacht werden, und der die Impulsbreite des Zeitsignals verringert. Das entsprechend geformte Signal gelangt zu einem zusätzlichen abwärts zählenden Zähler 49, dem das Vorschubsignal aus dem ersten Zähler 43 zugeleitet wird. Das geformte Zeitsignal gelangt weiterhin über einen Verzögerungskreis 43 zu einem Steuerschalter 55 einer Schalteinrichtung. Das verzögerte Zeitsignal stellt den Steuerschalter 55 ein und sorgt gleichzeitig für eine Rückstellung des Vorschubzählers auf den Wert Null. Durch die Einstellung des Steuerschalters 55 wird ein Zeitgeber 57 in Gang gesetzt, der eine Reihe von zeitgesteuerten Impulsen erzeugt, welche schrittweise den eingespeicherten Wert aus dem Zähler 49 auslesen, bis auch der Zähler 49 den Wert Null erreicht. Gleichzeitig mit dem Anstossen des Zeitgebers 57 betätigt der Steuerschalter 55 einen Ausgangstreiberkreis 59, der seinerseits die Zuführung der Behandlungsflüssigkeit zu dem Düsensatz 35 einschaltet, so dass die Flüssigkeit durch die Düsen in den Erntegutstrang eingebracht wird. Die Einbringung der Behandlungsflüssigkeit dauert so lange, bis der abwärts zählende Zähler 49 den Wert Null erreicht. In diesem Augenblick wird die Schalteinrichtung 55 und damit der Ausgangstreiberkreis 59 abgeschaltet. Gleichzeitig damit wird die Zufuhr der Behandlungsflüssigkeit zu dem Düsensatz 35 unterbrochen und der Zeitgeber 57 abgeschaltet.

Eine die Strömungsgeschwindigkeit der Behandlungsflüssigkeit steuernde Einrichtung 61 steuert die Dauer oder den Abstand zwischen zwei aufeinanderfolgenden Zeitsignalen des Zeitgebers 57. Dadurch wird die pro Zeittakt eingebrachte Menge an Behandlungsflüssigkeit entsprechend eingestellt.

Das Ausgangssignal des ersten Zählers 43 gelangt über einen Digital/Analog-Wandler zu einem Vorschubmessgerät 51. Der Wandler wird gesteuert durch des Ausgangssignal des Zeitimpulsformkreises 50.

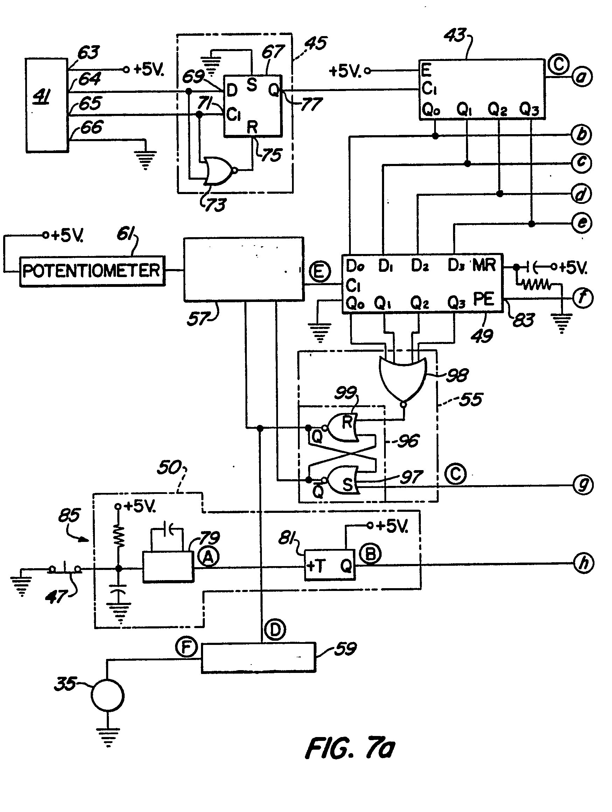

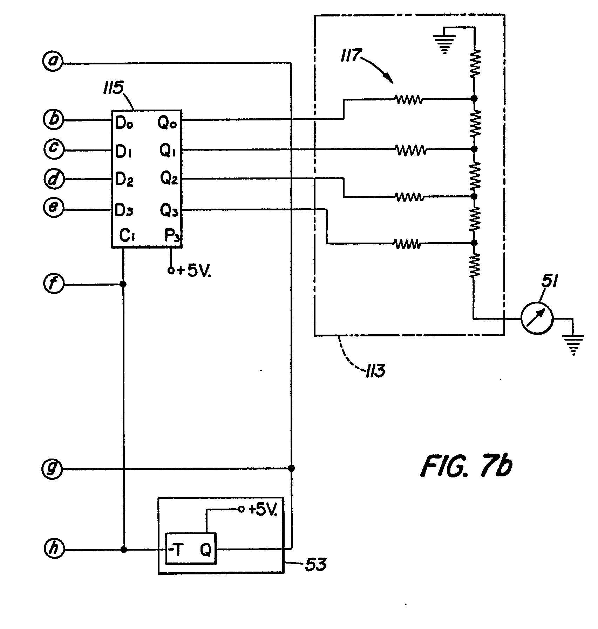

Die Figuren 7a, 7b zeigen Einzelheiten zu dem Schaltdiagramm nach Fig. 6, während Fig. 8 ein entsprechendes Zeitdiagramm für die einzelnen Impulse und Signale wiedergibt. Die Figuren 7a und 7b zeigen lediglich eine Möglichkeit um das Schaltdiagramm nach Fig. 6 zu verwirklichen.

Nach Fig. 7a ist der Vorschubwandler eine Wellenkodiereinrichtung, die pro Drehwinkel von 6° der Welle 34 des Messrades 33 ein Ausgangssignal liefert. Der Richtungsfühler 45 kann einen Flip-Flop 67 vom Typ D und ein ODER-Gatter 73 aufweisen. Die beiden Eingänge 69, 71 des Flip-Flops sind mit den beiden Ausgängen 64, 65 des Vorschubwandlers 41 verbunden, der einen Anschluss 63 für eine Spannungsquelle und einen Erdungsanschluss 66 aufweist. Die Eingänge des NOR-Gatters sind mit den beiden Eingängen 69, 71 verbunden, während dessen Ausgang mit dem Rückstellanschluss 75 des Flip-Flop 67 verbunden ist. Der Flip-Flop 67 arbeitet so, dass Rückdrehungssignale des Messrades über den Ausgang 77 des Flip-Flops 67 nicht dem Vorschubzähler 43 zugeführt werden. Der Vorschubzähler ist ein 4-Bit-binärer Zähler. Die 4 Ausgänge des Zählers sind mit den 4 Eingängen des abwärts zählenden Zählers 49 verbunden. Der Zeitgeberwandler 47 ist durch einen Schalter in Fig. 7a wiedergegeben, der durch einen Nocken geöffnet wird. Dieser Nocken liegt in der Bewegungsbahn eines Getriebeteils im Antriebszug des Presskolbens. Der Impulskreis 50 ist in Fig. 7a in Form eines RC-Filterkreises 85 wiedergegeben. Dieser weist Elemente 79 zum Ausfiltern von Störimpulsen wie Schliessimpulsen von Schaltern oder dgl. auf. Diese Funktion wird durch den monostabilen Multivibrator 81 unterstützt, der zugleich die Impulsbreite des Zeitgebersignals reduziert. Der Multivibrator ist mit einem eine Voreinstellung ermöglichenden Anschluss 83 des abwärts zählenden Zählers 49 verbunden. Der Azeitgeberimpuls an der Stelle A des Schaltelementes 79 liefert den Eingangsimpuls für den Multivibrator 81. Figur 8 zeigt das Verhältnis der Breite des Zeitgebersignals 87 zu der Breite des Impulses 89 an der Stelle B des Multivibrators 81. Dadurch gelangt zu dem abwärts zählenden Zähler 49 ein logisches 1-Signal, das den Zähler voreinstellt.

Der Multivibrator 81 ist ausserdem mit einem Verzögerungskreis 53 verbunden, der durch einen monostabilen Multivibrator gebildet wird. In Abhängigkeit vom Eingang des Impulses 89 erzeugt der Multivibrator einen verzögerten Impuls 95 (an der Stelle C) der übermittelt wird (a) an einen Steuerschalter 55, der durch einen RS-Flip-Flop 96 und ein NOR-Gatter 98 gebildet wird und (b) einem Vorschubzähler 43, um diesen zurückzustellen und die Aufnahme eines neuen Signals beim nächsten Kolbenzyklus zu ermöglichen. Der RS-Flip-Flop 55 kann zwei NOR-Gatter 97, 99 aufweisen. Der verzögerte logisch-1-Zeitgeberimpuls 95 wird durch einen Stelleingang des Gatters 97 empfangen und löst einen logisch-1-Ausgangsimpuls 101 von dem Ausgangsanschluss Q des Gatters 99 aus. Dieser Impuls (an der Stelle D) wird gleichzeitig dem Ausgangstreiberkreis 59, der durch einen üblichen Transistorverstärker 59 zum Einschalten der durch Solenoid betätigten Ventile der Einbringungsanordnung 35 gebildet wird, und einem Zeitgeber 57 zugeführt, der durch einen spannungsgesteuerten Oszillator 57 gebildet wird. Der Impuls 101 schaltet den Verstärker 59 ein, der wiederum die Betätigungseinrichtungen der Ventile der Einbringungsanordnung 35 einschaltet und betätigt. Der durch Spannung gesteuerte Oszillator 57 erzeugt eine Reihe von logisch-1-Impulsen 103 bis 106 (an der Stelle E), die durch eine Zeit T getrennt sind, welche proportional der Einstellung der Strömungsgeschwindigkeitssteuerung 61 ist, die wiederum durch ein Potentiometer gebildet wird. Die Impulse 103 bis 106 lesen den Zählwert in dem Abwärtszähler 49 schrittweise aus. Der Abstand oder die Zeitperiode zwischen aufeinanderfolgenden Impulsen 103 bis 106 kontrolliert somit die Zeitlänge, die erforderlich ist, den Zählwert im Abwärtszähler 49 auszuzählen, und damit letztlich die Zeitdauer, während der die Einbringungsanordnung 35 bei einem Vorschubsignal bestimmter Länge eingeschaltet bleibt. Wenn der Abwärtszähler 49 den Zählwert Null erreicht stellt das NOR-Gatter den RS-Flip-Flop 55 zurück, indem ein logisch-1-Impuls dem Rückstellanschluss des Gatters 99 zugeführt wird. Dadurch wird ein logisch-Null-Ausgangssignal am Anschluss Q des Gatters 99 erzeugt. Die Rückstellung des Steuer-Flip-Flops 55 führt dazu, dass der Verstärker 59 ausgeschaltet wird, wodurch auch die Elektromagnete der Ventile der Einbringungsanordnung 35 abfallen, und schaltet ausserdem den durch Spannung gesteuerten Oszillator 57 ab.

Gemäss einem weiteren Merkmal der Anordnung liefert eine Messeinheit 51 ein analoges Auslegesignal für das Vorschubsignal bei jedem Kolbenzyklus. Die Einrichtung 51 ist mit dem Vorschubzähler über einen üblichen Digital/Analog-Wandler 113 verbunden. Dieser kann durch ein übliches Digitalgedächtnis oder eine Verriegelungseinrichtung 115 und eine R-2R-Widerstandsleiter 117 gebildet sein. Das Vorschubsignal von dem Vorschubzähler 43 wird in dem Digitalgedächtnis in Abhängigkeit von der Überführung des Zeitgebereingangs C1 von einem hohen Wert zu einem niedrigen Wert gespeichert, welcher durch die rücklaufende Kante des Impulses 89 des Multivibrators 81 erzeugt wird. Der Wert oder das Vorschubsignal das in der Einrichtung 115 gespeichert ist, wird während eines hohen Zeitgeberniveaus überführt, wenn der für die Polarität massgebliche Anschluss P sich in dem logisch-1-Zustand befindet, was immer der Fall ist, wenn eine Gleichstromspannung ständig an dem Anschluss P anliegt. Die Datenüberführung während eines Zyklus des Kolbens 25 erfolgt somit während des nächsten Zyklus des Kolbens 25 durch den Eingang des nächsten Zeitgeberimpulses von dem Multivibrator 81 an der Einrichtung 115. Nachfolgend einer Datenüberführung während des hohen Zeitgeberniveaus wird das nächste Vorschubsignal vom Zähler 43 in der Einrichtung 115 in Abhängigkeit von dem Übergang von dem hohen Zustand zu dem niedrigen Zeitgeberzustand vom Multivibrator 81 gespeichert.

Bei Betrieb bringt das System 13 eine Erntegutbehandlungsflüssigkeit mit einer Geschwindigkeit ein, die in Abhängigkeit von der Ballenbildungsgeschwindigkeit steht. Die Ballenbildungsgeschwindigkeit wird gemessen durch Messung des Vorschubes der Heuladung in einer Ballenkammer 15 und zwar bei jedem Hub oder Zyklus des Presskolbens 25. Die Erntegutbehandlungsflüssigkeit wird in einer Menge eingebracht, die direkt proportional zu dem Vorschub der Heuladung durch die Kammer 15 ist. Die Heuladungsverschiebung wird gemessen durch eine Wellenkodiereinrichtung 41, welche die Drehung der Welle 34 misst, auf der das Rad 33 befestigt ist. Das Vorschubsignal wird in einem Vorschubzähler 43 gespeichert. Das Vorschubsignal von der Kodiereinrichtung 41 wird zu dem Vorschubzähler 43 über einen Richtungsfühler 45 übertragen, der jedes Vorschubsignal von der Kodiereinrichtung 41 ausfiltert, das auf einer Rückwärtsdrehung der Welle 34 beruht. Ein Zeitgeberschalter 47 erzeugt ein Zeitgebersignal während des Verdichtungshubes des Kolbens 25. Dieses Signal wird der Eliminationseinrichtung 79 für Schaltschliessimpulse zugeführt, um jede störende Vibration des Schalters 47 zu eliminieren. Ein Zeitgebersignal 87 betätigt einen monostabilen Multivibrator 81, um die Pulsweite 89 zu verringern,welcher Impuls dann die Übertragung des vorherigen Vorschubsignals, das in der Einrichtung 115 gespeichert ist, zu der Messeinrichtung 51 auslöst und das nächste Vorschubsignal von dem Vorschubzähler 43 zu dem Abwärtszähler 49 überführt. Das Zeitgebersignal 49 ist ein Uhrimpuls für die Einrichtung 115, um das vorhergehende Vorschubsignal durch die R-2R-Widerstandsleiter 117 zu der Messeinrichtung 51 zu führen, wo das Vorschubsignal als ein den Vorschub der Heuladung durch die Kammer 15 bei einem Kolbenzyklus 25 analoges Signal gebildet wird. Das Zeitgebersignal 89 wird weiter dem monostabilen Multivibrator 91 zugeführt, um einen verzögerten Impuls 95 zu bilden, der zur Rückstellung des Vorschubzählers 43 zur Aufnahme und Speicherung eines nächsten Vorschubsignals und einem RS-Flip-Flop 55 zugeführt wird, um ein logisch-1-Ausgangssignal für den Anschluss Q der Einrichtung 115 zu erzeugen.

Der logisch-1-Ausgangsimpuls vom Anschluss Q des Flip-Flop 55 betätigt den Verstärker 59 und als Folge davon die elektromagnetischen Spulen der Ventile der Einbringungsanordnung 35. Ausserdem wird der durch Spannung gesteuerte Oszillator 57 betätigt. Die Ausgangsimpulse des Oszillators lösen zeitlich den programmierbaren Abwärtszähler 49 aus, bis dieser einen Zählwert Null erreicht, wodurch der Ausgang Q des Flip-Flops 55 in den niedrigen oder logisch-0-Zustand zurückgeführt wird. Dadurch wird der Verstärker 55 abgeschaltet, so dass die elektromagnetischen Spulen der Ventile abfallen und der Oszillator 57 ausgeschaltet wird. Jeder Impuls des Oszillators 57 repräsentiert eine Einheit der Verstellbewegung der Wellenkodiereinrichtung 41. Das zur Steuerung der Strömungsgeschwindigkeit dienende Potentiometer 61 stellt die Zeit zwischen den aufeinanderfolgenden Impulsen 103 bis 106 des Oszillators 57 ein. Hierdurch wird die Einschaltzeit der Solenoide der Steuerventile der Einbringungsanordnung 35 bestimmt und damit die Menge an Flüssigkeit, die dem Ballen pro Vorschubeinheit zugeführt wird. Die Einstellung des Potentiometers 61 basiert auf dem Feuchtigkeitsgehalt und damit der Dichte des Erntegutes, so dass die Einbringungsgeschwindigkeit optimiert wird. Dadurch wird das Vorschubsignal, welches in der Tat ein Volumenmesssignal ist, umgewandelt auf ein Gewichtssignal, in dem unabhängig die Erntegutfeuchtigkeit oder die Dichte bestimmt wird und das Potentiometer 61 eingestellt wird.

Die Erfindung ist vorstehend in Verbindung mit einem bevorzugten Ausführungsbeispiel beschrieben. Es ist ersichtlich, dass die Erfindung auch in anderer Weise verwirklicht werden kann. So kann eine positive Verdrängerpumpe an Stelle der durch Elektromagnet betätigten Ventile 179 als Mittel zur Einbringung diskreter Mengen an Flüssigkeit in Abhängigkeit von der variierenden Ballenbildungsgeschwindigkeit eingesetzt werden. In diesem Fall würde das Vorschubsignal dazu benutzt, die Menge an Flüssigkeit einzujustieren, die durch die Pumpe geliefert wird. All diese Möglichkeiten sollen mit umfasst sein.

## Patentansprüche

1. Anordnung an einer Presse zur Herstellung von Ballen aus Erntegut, die einen Aufsammler (19) zum Aufnehmen des Erntegutes vom Boden, eine Einrichtung (21, 23) zum Einbringen des aufgenommenen Gutes in eine Ballenformkammer (15) und einen zyklisch in dieser hin und her bewegbaren Kolben (25) umfasst, der das zugeführte Erntegut zu einem Ballenstrang verdichtet und disen durch die Ballenformkammer zu einer Bindeeinrichtung schiebt, welche Anordnung eine mit einem Vorratsbehälter (37) verbindbare, der Ballenformkammer zugeordnete Einbringungseinrichtung (137, 181) für eine Behandlungsflüssigkeit, insb. eine rasch verdampfende Flüssigkeit, aufweist, die zyklisch in Abhängigkeit von der Bewegung des Ballenstranges bei jedem Presshub des Kolbens (25) betätigbar ist, dadurch gekennzeichnet, dass eine die Ballenbildungsgeschwindigkeit erfassende Einrichtung (33, 41) in Form von einem Vorschubwandler (41) und einem Vorschubzähler (43) zum Speichern eines Vorschubsignals vorgesehen ist, welches dem Vorschub des Erntegutes durch die Ballenformkammer (15) bei jedem Arbeitsspiel des Kolbens (25) entspricht, und dass diese Einrichtung (33, 41) die Einbringungsgeschwindigkeit der Flüssigkeit bei jedem Presshub in Abhängigkeit von der erfassten Ballenbildungsgeschwindigkeit automatisch steuert.

2. Anordnung nach Anspruch 1, dadurch gekennzeichnet, dass zusätzlich ein abwärtszählender Zähler (49) zur Aufnahme und Speicherung des Vorschubsignals sowie eine Schalteinrichtung (55, 59) zum Ein- und Ausschalten der Einbringungseinrichtungen und eine Zeiteinrichtung (57) vorgesehen sind, um das Vorschubsignal aus dem zweiten Zähler (49) auszulesen und die Schalteinrichtung (55, 59) für eine Zeitperiode zu betätigten, die der Grösse des Vorschubsignals proportional ist.

3. Anordnung nach Anspruch 2, gekennzeichnet durch eine die Strömungsgeschwindingkeit der Flüssigkeit steuernde Einrichtung (61), welche den Abstand der das Auslesen des Abwärtszählers (49) steuernden Taktimpulse erzeugt, welche die Zeitdauer bestimmen, während der die Einbringungseinrichtung bei einem Vorschubsignal bestimmter Länge eingeschaltet bleibt.

## Claims

1. An arrangement on a press for producing bales from crop material, which includes a pick-up means (69) for picking up the crop material from the ground, a means (21, 23) for introducing the picked-up material into a bale forming chamber (15) and a piston (25) which is reciprocable cyclycally in said bale forming chamber and which compacts the crop material fed thereto to form an elongate bale configuration and which pushes same through the bale forming chamber to a binding means, which arrangement has a means (137, 181) which can be communicated with a supply container (37) and which is associated with the bale forming chamber, for introducing a treatment fluid, in particular a fluid which evaporates quickly, said fluid introducing means being actuable cyclically in dependence on the movement of the elongate bale configuration in each pressing stroke movement of the piston (25), characterised in that there is provided a means (33, 41) for detecting the bale forming rate in the form of a forward feed transducer (41) and a forward feed counter (43) for storing a forward feed signal which corresponds to the forward feed of the crop material through the bale forming chamber (15) in each operating cycle of the piston (25), and that said means (33, 41) automatically controls the speed of introduction of the fluid in each pressing stroke movement in dependence on the detected bale forming rate.

2. An arrangement according to claim 1 characterised in that there are additionally provided a down-counting counter (49) for receiving and storing the forward feed signal, a switching means (55, 59) for switching the introducing means on and off and a timing means (57) for reading the forward feed signal out of the second counter (49) and for actuating the switching means (55, 59) for a period of time which is proportional to the value of the forward feed signal.

3. An arrangement according to claim 2 characterised by a means (61) for controlling the rate of flow of the fluid, said means (61) producing the spacing of the clock pulses which control the operation of reading out the down counter (49) and which determine the period of time during which the introducing means remains switched on with a forward feed signal of given length.

## Revendications

1. Système prévu sur une presse pour la production de balles à partir de produits de récolte, comportant un ramasseur (19) pour ramasser les produits de récolte sur le sol, un dispositif (21, 23) pour introduire les produits ramassés dans une chambre (15) de formation des balles et un piston (25) se déplaçant cycliquement dans cette chambre en un mouvement de va-et-vient, qui comprime les produits de récolte introduits en un boudin de balle et qui repousse celui-ci à travers la chambre de formation des balles jusqu'à un dispositif de liage, ce dispositif comportant un dispositif d'introduction ou d'injection (137, 181) destiné à un liquide de traitement, en particulier à un liquide s'évaporant rapidement, conjugué à la chambre de formation des balles et pouvant être relié à un réservoir (37), ce dispositif pouvant être actionné cycliquement en fonction du mouvement du boudin de balle à chaque course de compression du piston (25), caractérisé en ce qu'il est prévu un dispositif (33, 41) déterminant la vitesse de formation des balles, sous la forme d'un transducteur d'avance (41) et d'un compteur d'avance (43), pour mémoriser un signal d'avance qui correspond à l'avance des produits de récolte à travers la chambre (15) de formation des balles à chaque course de travail du piston (25), et en ce que ce dispositif (33, 41) commande automatiquement la vitesse d'introduction du liquide à chaque course de compression en fonction de la vitesse ainsi détectée de formation des balles.

2. Système suivant la revendication 1, caractérisé en ce qu'il est prévu en outre un compteur (49) à comptage décroissant pour la réception et la mémorisation du signal d'avance, ainsi qu'un dispositif de commutation (55, 59) pour la mise en circuit et hors circuit du dispositif d'introduction et un dispositif formant horloge (57) pour lire le signal d'avance à partir du second compteur et pour actionner le dispositif de commutation (55, 59) pendant un laps de temps qui est proportionnel à la valeur ou à l'amplitude du signal d'avance.

3. Système suivant la revendication 2, caractérisé par un dispositif (61) commandant la vitesse d'écoulement du liquide, qui établit l'espacement des impulsions de rythme commandant la lecture du compteur décroissant (49), lesquelles déterminent la durée pendant laquelle le dispositif d'introduction demeure en circuit pour un signal d'avance de longueur déterminée.

# FIG. 1

# FIG. 2

FIG. 4

FIG. 3

FIG. 5

FIG. 8

| | | |
|---|---|---|
| Zeitgeb.Impuls | Ⓐ | |
| Abwärtszähler | Ⓑ | |
| Rückstellsignal | Ⓒ | |
| Steuersignal | Ⓓ | |
| Zeittakt | Ⓔ | |
| Ventilsteuersign. | Ⓕ | |

Zeit

FIG. 6

FIG. 7a

FIG. 7b